# EUROPEAN PATENT APPLICATION

(11) **EP 2 371 520 A2**
(43) Date of publication of application: **05.10.2011**
(21) Application number: 11169887.4
(22) Date of filing: 30.01.2007
(51) Int. Cl.: B29C 51/26, B29C 51/38, B29C 51/04, B29C 51/34

(54) **Apparatus for thermoforming containers**

(30) Priority: 02.02.2006 IT MO20060036
(62) Divisional of application: 07704235.6
(71) Applicant: Sarong Societa' Per Azioni, 42046 Reggiolo (RE) (IT)
(72) Inventor: Minghetti, Bianca Elena, 19031 Ameglia (SP) (IT)
(74) Representative: Pandolfi, Paolo

(57) **Abstract**

An apparatus is provided with die elements (17, 18) suitable for shaping containers (2) from a sheet material, said die elements (17, 18) being movable in relation to one another parallel to an advancing plane of said sheet material, and with locking means (14) suitable for stopping said undeformed sheet material on said die elements (17, 18) in an operating position, between said locking means (14) and said die elements (17, 18) holding means (21; 23) being interposed that is arranged for reciprocally immobilising said die elements (17, 18) in said operating position.

## Description

The invention relates to an apparatus for thermoforming containers, in particular containers having undercuts.

Apparatuses are known for thermoforming containers having undercuts from a sheet material, the apparatuses comprising supporting means that supports a reel on which a continuous strip of this sheet material is wound, and moving means that indexes the sheet material on a plane in an advancing direction.

A heating station is provided in which the sheet material is heated, so as to reach a temperature near the softening temperature of the thermoformable material.

Downstream of the heating station a forming station is provided into which the sheet material that has just been heated is conducted to be shaped by punch means cooperating with die means.

The forming station comprises bell locking means that is moveable towards and away from the die means that locks the sheet material on a resting surface of the die means so that forming can occur correctly.

In the die means a plurality of forming cavities is obtained in each of which a containing cavity of a container is defined.

The containing cavity of each container is delimited by walls that comprise undercuts and by an opening, through which the container is subsequently filled with a product. Forming fluid injecting means is provided that cooperates with the punch means in such a way as to press the portion of sheet material affected by the forming against the surfaces of each forming cavity.

The die means enables several containers to be moulded simultaneously, arranged along transverse rows with respect to the sheet material. The die means comprises a series of forming devices arranged adjacent to one another and aligned in directions that are transverse to the advancing direction of the sheet material. Each forming device interacts with the sheet material to shape a container. In this way several containers are formed simultaneously that are arranged on the same strip along rows that are transverse to the advancing direction of the sheet material.

Each forming device comprises movable mould portions, defining a single forming cavity that can move towards or away from one another in directions parallel to the advancing plane and perpendicular to the advancing direction of the sheet material. The forming devices are spaced apart from one another so that each mould portion can move transversely without interfering with a mould portion associated with an adjacent forming device. Once a container has been formed, it is possible to disengage the latter from the respective forming cavity without there being impediments generated by the portions of container that are provided with undercuts.

Each newly moulded container can thus advance, suspended from the sheet material, in the advancing direction.

In this way a plurality of containers is obtained that are ready to be filled with a product in a filling station.

At the end of filling the containing cavities, the sheet material advances to a welding station. In the welding station, along the edges of the containing elements that have just been filled a film of thermoformable material is welded that acts as a closing element, or cover elements can be associated. Subsequently, the containers that have just been filled and welded are separated from the thermoformable sheet of material from which they have been obtained using suitable shearing means.

A drawback of the known apparatuses for thermoforming is that they do not enable the sheet material to be exploited in an efficient manner, thus generating a great quantity of waste. In particular, the forming devices require suitable transverse driving spaces that lead to having extensive portions of sheet material that are not usable.

Another drawback of known apparatuses is that if containers of different shape are produced simultaneously with which different forming times are associated, it is not possible to fully exploit the productive capacity of the apparatus. The productivity of the apparatus in this case in fact depends on the types of containers that require longer forming times.

A further drawback of the known apparatuses is that they require driving devices of the mould portions that are structurally very complex. In particular, when the forming fluid is injected inside the forming cavity strong thrusts are generated that tend to move the mould portions away from one another. In order to counteract these thrusts and enable correct thermoforming it is thus necessary to provide driving devices that are not only very bulky but are also very expensive.

A still further drawback of the known apparatuses is that they are not very versatile. If different types of container are thermoformed simultaneously it is not possible to decide a suitable level of productivity for each type of container in order to meet given production needs.

An object of the invention is to improve known apparatuses for thermoforming containers.

A further object of the invention is to provide an apparatus that enables containers to be shaped in a faster and more precise manner.

A still further object of the invention is to provide an apparatus for thermoforming containers provided with driving devices of the mould portions that have reduced dimensions that are not costly and are structurally simplified. According to the invention there is provided an apparatus, comprising die elements that are suitable for shaping containers from a sheet material, said die elements being movable with respect to one another parallel to an advancing plane of said sheet material, locking means suitable for stopping said undeformed sheet material on said die elements in an operating position, characterised in that between said locking means and said die elements there is interposed holding means arranged for reciprocally immobilising said die elements in said operating position.

Owing to the invention, it is possible to obtain an apparatus that enables very precise and safe thermoforming to be obtained owing to the holding means that ensure correct reciprocal positioning of the die elements. Further, owing to the holding means, the apparatus can be provided with devices for driving the mould portions that in addition to having very reduced overall dimensions, are also cheaper and structurally simplified.

The invention can be better understood and implemented with reference to the attached drawings that illustrate some embodiments thereof by way of non-limitative example, in which:
Figure 1 is a perspective and fragmentary view that shows schematically an apparatus for thermoforming containers;
Figure 2 shows schematically from above a portion of the apparatus in Figure 1 in an operating configuration;
Figure 3 is a view like the one in Figure 2 that shows the apparatus in Figure 1 in another operating configuration;
Figure 4 is a cross section of the apparatus in Figure 2 taken along the plane IV-IV.
Figure 5 is an enlarged view of a portion of the apparatus shown in Figure 4.
Figure 6 is a fragmentary and partially sectioned view of an embodiment of the apparatus in an operating configuration;
Figure 7 is a view of the apparatus in Figure 6 in another operating configuration;
Figure 8 is a schematic view of another embodiment of the apparatus for thermoforming containers.

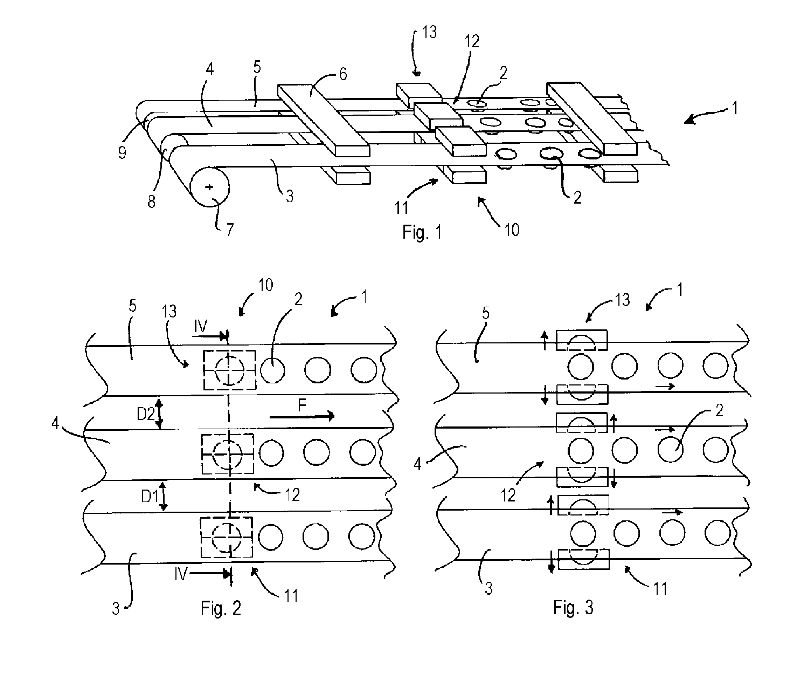

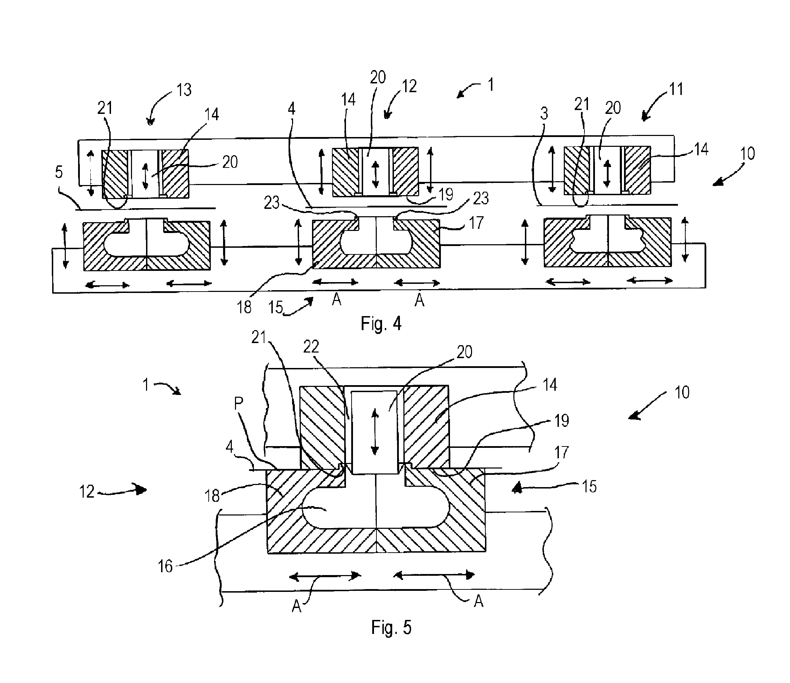

With reference to Figures 1 to 5, there is shown an apparatus 1 for thermoforming containers 2 from a sheet material. The sheet material comprises a plurality of continuous longitudinal strip portions that are distinct from one another that are unwound from respective reels using moving means (not shown). In particular, the moving means of the apparatus disclosed with reference to Figures 1 to 5 enables a first strip portion 3, a second strip portion 4 and a third strip portion 5 of sheet material to be moved that are unwound respectively from a first reel 7, from a second reel 8 and from a third reel 9, but it is also possible to provide a different number of strip portions in function of production needs.

The moving means enables the first strip portion 3, the second strip portion 4 and the third strip portion 5 to be indexed on a plane in an advancing direction F.

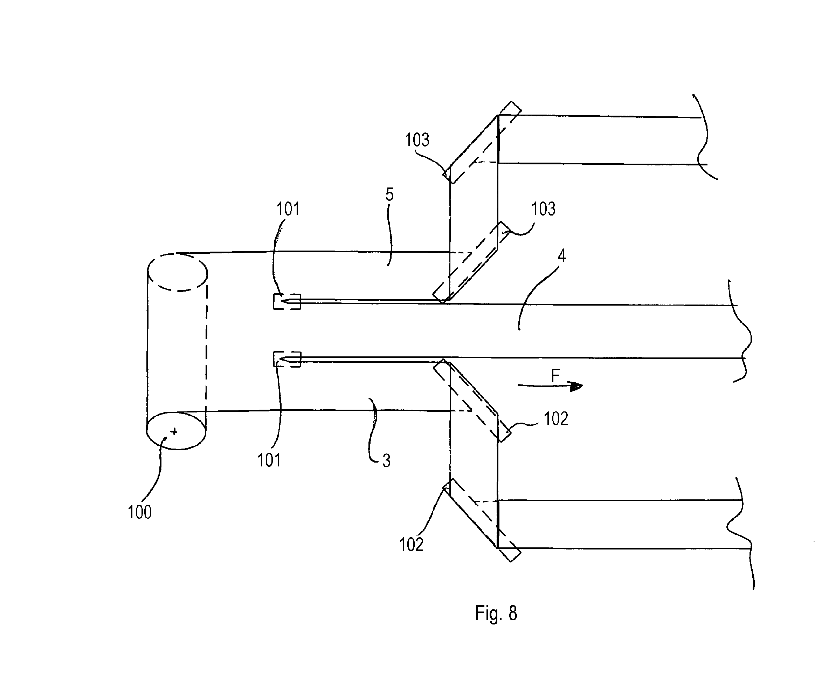

In an embodiment of the apparatus 1, shown in Figure 8, a sole reel 100 of sheet material is provided, from which several strip portions can be obtained. A cutting device is provided, comprising blade elements 101 that are used to cut the sheet material parallel to the advancing direction F, so as to obtain for example the first strip portion 3, the second strip portion 4 and the third strip portion 5. Return means is further provided that is arranged in such a way as to space the first strip portion 3, the second strip portion 4 and the third strip portion 5 apart from one another. The return means comprises, for example, first return rollers 102 that are used to divert the first strip portion 3 during advancing in such a way as to distance it from the second strip portion 4. The return means further comprises second return rollers 103 that divert the third strip portion 5 during advancing in such a way as to distance it from the second strip portion 4.

A heating station 6 is provided in which the sheet material, after advancing by a step, stops for a necessary time so that it can be heated to a softening temperature necessary for obtaining correct thermoforming.

Downstream of the heating station 6 a forming station 10 is arranged that provides for shaping the sheet material to obtain the containers 2.

The forming station 10 is shaped for processing the first strip portion 3, the second strip portion 4 and the third strip portion 5 separately and independently of one another. The forming station 10 comprises a forming device for each continuous longitudinal strip portion. In particular a first forming device 11, a second forming device 12, and a third forming device 13 are provided that are aligned transversely to the advancing direction F that are drivable independently of one another, and are arranged for interacting respectively with the first strip portion 3, the second strip portion 4 and the third strip portion 5. The aforementioned forming devices can be configured in such a way that each of them can shape a given type of container, thus obtaining production lines for different products. It is possible to regulate appropriately the speed of the thermoforming cycle for each production line in function of the thermoforming time required by a given type of container, thus reducing downtime. It is further possible to control the production speed of each line independently of the other lines to meet determined production needs. For example, it is also possible to use only one/two of the production lines and to deactivate the remaining production line/s.

As the aforementioned forming devices are structurally configured in a similar manner only the second forming device 12 will be disclosed below so as to simplify the description.

The second forming device 12 provides a die 15 comprising a forming cavity 16. The die 15 is configured in such a way as to shape a container 2 according to a determined shape having undercuts and to extract the latter therefrom once forming has terminated.

In particular, the die 15 comprises a first mould element 17 and a second mould element 18 that define the forming cavity 16 and are reciprocally movable in transverse directions A arranged transversely to the advancing direction F. In this way the first mould element 17 and the second mould element 18 enable the container 2 to be disengaged once the forming cavity 16 has been formed. There is provided a driving device (not shown) that drives the first mould element 17 and the second mould element 18 towards or away from one another by a quantity that is such as to enable the complete disengagement from the container 2 that has just be formed and so as not to interfere with adjacent mould elements associated respectively with the first forming device 11 and the third forming device 13. The latter are drivable by means of a further driving device and a still further driving device in a similar manner to what has been disclosed with reference to the second forming device 12. In order to enable the driving devices to correctly drive the mould elements a first distance D1 is provided that appropriately separates the first strip portion 3 from the second strip portion 4, and a second distance D2 that separates the latter from the third strip portion 5. This enables the sheet material to be exploited effectively. In particular the waste is avoided that would occur if the sheet material also affected the space regions necessary for avoiding interference between adjacent mould elements.

There is provided a locking element 14 that is movable perpendicularly to the advancing direction of the sheet material, which is used to lock the latter on resting surfaces P obtained on the die 15, in such a way as to enable forming of a container. A punch 20 is provided that is coaxial to the locking element 14 and is slidable along a through hole 22 of the latter that cooperates with the die 15 and with means for injecting a forming fluid for shaping the sheet material.

The locking element 14 is provided with an operating surface 19 arranged for interacting with the resting surfaces P.

On the operating surface 19 an abutting cavity 21 is obtained that surrounds the hole 22 and is configured for coupling with projecting portions 23 obtained on the first mould element 17 and on the second mould element 18. The projecting portions 23 are configured in such a way that, when the first mould element 17 and the second mould element 18 are in reciprocal contact, they surround an opening zone of the forming cavity 16. Coupling of the projecting portions 23 with the abutting cavity 21 enables, during forming of a container, the first mould element 17 and the second mould element 18 to be kept joined together with great safety and precision and the sheet material to be locked with greater efficacy. This further enables the thrusts generated by the punch 20 and by the forming fluid on the mould elements to be better counteracted, and consequently enables the driving device to be structurally dimensioned, taking account of the reduction in the stress to which it is subjected during forming owing to coupling of the projecting portions 23 with the abutting cavity 21. Similarly to what has been disclosed with reference to the second forming device 12, also the first forming device 11 and the third forming device 13 are provided with respective locking elements, each of which can be driven independently of the others.

If it is desired to shape a container that in addition to the aforementioned undercuts comprises further undercuts associated with the bottom that would prevent the removal of the two mould elements from the container 2, it is possible to provide a die divided into three parts. In particular, this die may comprise two elements that are suitable for defining side walls of the container and which are movable in relation to one another parallel to the advancing plane of the sheet material, and a third mould element suitable for defining a bottom of the container and perpendicularly movable away from the advancing plane of the sheet.

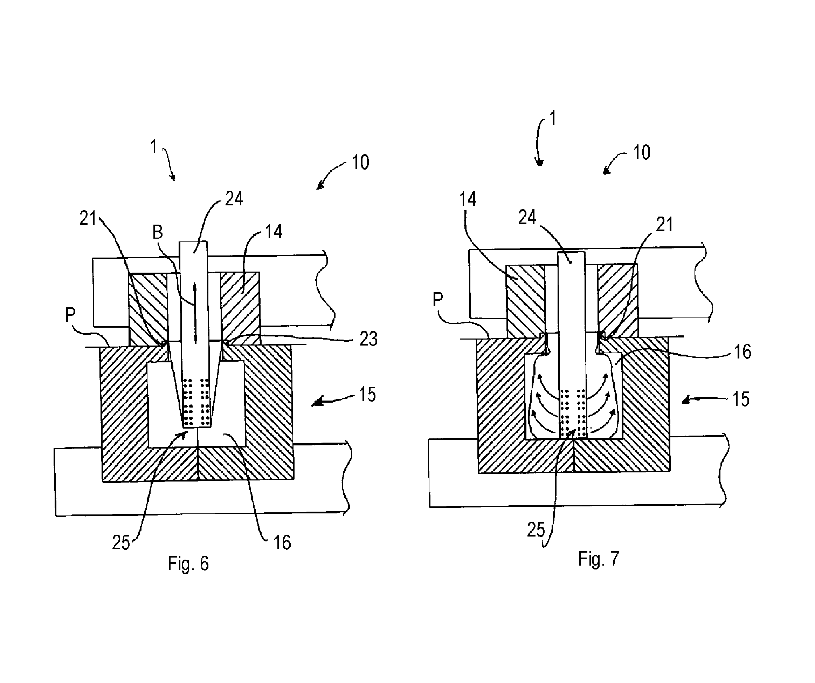

With reference to Figures 6 and 7, an embodiment of the apparatus 1 is shown that is provided with some parts that are common to the embodiment disclosed with reference to Figures 1 to 5 and indicated by the same reference number. The embodiment of the apparatus 1 shown in Figures 6 and 7 differs from the one in Figures 1 to 5 in what will be disclosed below.

Each forming device comprises a punch-injector 24 that is movable in a drawing direction B from a first position near an opening zone of the forming cavity 16, to a second position near a bottom zone of the forming cavity 16. The punch-injector 24 is internally hollow and is provided at an end arranged for interacting with the sheet material, with nozzles 25 that are used to inject inside the forming cavity a forming fluid for shaping the sheet material after drawing. The nozzles 25 are configured in such a way as to appropriately distribute the forming fluid inside the forming cavity, directing it from the bottom zone to the opening zone to obtain better and more rapid adhesion of the sheet material to the internal surfaces of the die 15. During operation, the first strip portion 3, and/or the second strip portion 4, and/or the third strip portion 5 are unwound from the respective reels by means of the moving means, and are advanced by a step in the advancing direction F, in such a way that they interact initially with the heating station 6.

Zones of the sheet material that have to be shaped are brought to a softening temperature in the heating station 6, and subsequently they are advanced by another step towards the forming station 10. The die 15 and the locking element 14 are then brought near one another. In this way each of the strip portions is locked between the die 15, the mould elements of which are in reciprocal contact, and the locking element 14. In particular, the sheet material is locked between the resting surfaces P and the operating surface 19 and between the abutting cavity 21 and the projecting portions 23.

With reference to the embodiment of the apparatus in Figures 6 and 7, the punch-injector 24 is subsequently driven in the drawing direction B. The punch-injector 24, by moving to the bottom zone of the forming cavity 16, draws the sheet material. Once it has arrived near the bottom zone (as Figure 7 shows), the punch-injector 24 injects, through the nozzles 25, the forming fluid, directing the latter from bottom to top to progressively press the sheet material to the internal surfaces of the forming cavity 16 and obtain a container 2. Subsequently, the punch-injector 24 is extracted from the die 15.

The container 2 that has just been shaped is kept inside the die 15 for a cooling time that is such as to enable the shape to become stable. The locking element 14 is then moved away from the die 15 in a direction that is perpendicular to the advancing plane of the sheet material, so as to move the abutting cavity 21 away from the projecting portions 23. This enables the mould elements to move away from one another, moving in a direction that is transverse to the advancing direction of the sheet material (as shown in Figure 3) and disengaging the forming cavity 16 from the container 2 that has just been shaped. At this point, the sheet material can be advanced by a further step to a filling station (non shown), where the containers 2 suspended to the sheet material are filled with a product. At the end of filling, the containers 2 can be taken to a welding station where they are welded with a film of thermoformable material and lastly they can be conveyed to a cutting station where they are separated from the sheet material that supports them. Alternatively to the film of thermoformable material, it is possible to seal the filled containers by means of cover elements.

## Claims

1. Apparatus, comprising die elements (17, 18) suitable for shaping containers (2) from a sheet material, said die elements (17, 18) being movable in relation to one another parallel to an advancing plane of said sheet material, locking means (14) suitable for stopping said undeformed sheet material on said die elements (17, 18) in an operating position, **characterised in that** between said locking means (14) and said die elements (17, 18) holding means (21; 23) is interposed that is arranged for reciprocally immobilising said die elements (17, 18) in said operating position.

2. Apparatus according to claim 1, wherein said locking means (14) comprises an operating surface (19) suitable for interacting with resting surfaces (P) provided on said die elements (17, 18).

3. Apparatus according to claim 2, and further comprising a forming cavity (16) having an opening zone surrounded by said resting surfaces (P).

4. Apparatus according to claim 2, or 3, wherein said holding means comprises abutting cavity means (21) obtained on said operating surface (19).

5. Apparatus according to claim 4, wherein said holding means comprises projecting portions (23) configured in such a way as to couple with said abutting cavity means (21).

6. Apparatus according to claim 5, as claim 4 is appended to claim 3, wherein said projecting portions (23) surround said opening zone.

7. Apparatus according to claim 5, or 6, wherein said projecting portions (23) project transversely from said resting surfaces (P).

8. Apparatus according to claim 3, or according to claim 4, as appended to claim 3, or according to claim 5, as claim 4 is appended to claim 3, or according to claim 6, or according to claim 7, as appended to claim 6, and further comprising punch means (24) that is movable from said opening zone to a bottom zone of said forming cavity (16) to draw said sheet material.

9. Apparatus according to claim 8, wherein on said punch means (24) injecting means is obtained that is suitable for injecting a forming fluid inside said forming cavity (16).

10. Apparatus according to claim 9, wherein said injecting means comprises nozzles (25) configured in such a way as to act from said bottom zone.

11. Apparatus according to claim 10, wherein said nozzles (25) are positioned in such a way as to direct said forming fluid from said bottom zone to said opening zone.
